# EUROPÄISCHE PATENTSCHRIFT

(11) **EP 2 631 523 B1**
(45) Veröffentlichungstag und Bekanntmachung des Hinweises auf die Patenterteilung: **09.12.2015**
(21) Anmeldenummer: 13000865.9
(22) Anmeldetag: 21.02.2013
(51) Int. Cl.: F16L 33/207, F16L 33/30, F16L 47/04, F16L 19/02

(54) **KUPPLUNGSELEMENT FÜR EINE SCHLAUCHKUPPLUNG**
COUPLING ELEMENT FOR A HOSE COUPLING
ÉLÉMENT DE COUPLAGE POUR UN COUPLAGE DE FLEXIBLE

(30) Priorität: 27.02.2012 DE 202012001877 U
(43) Veröffentlichungstag der Anmeldung: 28.08.2013
(73) Patentinhaber: Voswinkel Entwicklungs- und Verwaltungs-GmbH & Co. KG, 58540 Meinerzhagen (DE)
(72) Erfinder: Schmitt, Frank, 58540 Meinerzhagen (DE); Weiland, Georg, 58540 Meinerzhagen (DE)
(74) Vertreter: Buse, Mentzel, Ludewig Patentanwaltskanzlei

(56) Entgegenhaltungen:
- EP-A1- 0 784 182
- EP-A1- 1 004 807
- DE-U1-202004 008 126
- GB-A- 2 271 157
- US-A1- 2006 226 650
- US-B1- 6 279 966

## Beschreibung

Die Erfindung betrifft ein Kupplungselement für eine Schlauchkupplung, insbesondere für eine Schlauchkupplung zum Einsatz bei Hochdruckhydraulikleitungen und ein Verfahren zur Herstellung eines solchen Kupplungselements.

Ein Kupplungselement für Hochdruckhydraulikleitungen ist aus dem deutschen Gebrauchsmuster DE 20 2004 008 126 U1 bekannt. Dieses Kupplungselement ist ein rohrartiger Anschlussstutzen, der einen Schlauchnippel und Mittel zum Anschluss an eine Armatur aufweist. An dem Schlauchnippel ist eine Schlauchhaltevorrichtung in Form rippenartiger Ausformungen vorgesehen. Zur Montage wird der Schlauchnippel des Kupplungselementes in den Innenschlauch der zu befestigenden Hochdruckhydraulikleitung eingeschoben. Die rippenartigen Ausformungen verhindern dann ein leichtes Abziehen des Schlauches. Gleichzeitig mit dem Hochdruckhydraulikschlauch wird in der Regel eine auf dem Schlauchende sitzende Pressfassung auf den Schlauchnippel aufgeschoben. Zur festen Verbindung des Hochdruckhydraulikschlauchs mit dem Kupplungselement wird die Pressfassung durch radiales Verpressen auf das Kupplungselement aufgepresst. Ein solches Kupplungselement für Hochdruckhydraulikleitungen wird aus Metall, beispielsweise Stahl, Edelstahl oder Messing hergestellt. Die rippenartigen Ausformungen lassen sich mit hoher Präzision in das rohrartige Halbzeug einarbeiten. Die Formgebung kann dabei durch spanende oder spanlose Bearbeitung erfolgen, nämlich durch Drehen, Fräsen, Rundhämmern oder Rollieren. Die Herstellung eines solchen Kupplungselementes ist jedoch aufgrund der notwendigen Formgebung des Metallrohlings vergleichsweise kostenaufwendig.

Eine kostengünstigere Herstellung eines Kupplungselementes zeigt das Dokument EP 0 784 182 A1. Hier besteht das Kupplungselement aus einem glasfasergefüllten Kunststoff auf Polyamidbasis. Das Kupplungselement wird durch Spritzgießen hergestellt und findet Anwendung als Schlauchnippel von Waschgeräten. Bei derartigen Anwendungen im Bereich der Wasserhydraulik treten aufgrund des Wasserdrucks Betriebsdrücke von maximal 0,6 MPa auf. Die entsprechenden Schlauchleitungen sowie Kupplungen müssen sicherheitshalber einem Berstdruck von 2 MPa standhalten. Ein solches Kupplungselement ist jedoch aufgrund seiner geringen Druckfestigkeit nicht für Schlauchkupplungen von Hochdruckhydraulikleitungen anwendbar, wo die Pressfassung durch radiales Verpressen auf den Schlauchnippel aufgepresst wird und in der Anwendung hohen Betriebsdrücken von mehr als 5 MPa ausgesetzt ist.

Aufgabe der vorliegenden Erfindung ist es ein Kupplungselement für Schlauchkupplungen zur Verfügung zu stellen, welches auf kostengünstige Weise herstellbar ist und für Hochdruckhydraulikleitungen einsetzbar ist.

Diese Aufgabe wird mit einem Kupplungselement für Hochdruckhydraulikleitungen mit den Merkmalen des Anspruches 1 erfüllt. Das neue Kupplungselement ist ein Hybridbauteil. Der Anschlussstutzen besteht nämlich aus einem Kunststoffstutzen und einer im Kunststoffstutzen angeordneten als Druckträger dienenden Trägerhülse. Der aus Kunststoff bestehende Stutzen und die vorzugsweise metallische Trägerhülse sind dabei unlösbar miteinander verbunden. Der hybride rohrartige Anschlussstutzen, ist an einem Ende, dem vorderen Ende, an eine Armatur anschließbar, beispielsweise über eine Überwurfmutter. Am anderen Ende des Anschlussstutzens ist der Kunststoffstutzen zu einem Schlauchnippel geformt, so dass er mit diesem Ende, dem Einsteckende, in einen Hochdruckschlauch eingeschoben werden kann. Der Schlauchnippel besitzt in einem Haltebereich radial zum Hochdruckschlauch gerichtete Vorsprünge, beispielsweise in Form von Umfangsrippen. Diese Vorsprünge können im Querschnitt symmetrische oder unsymmetrische Vorsprünge sein. Sie können von gleicher oder unterschiedlicher Dimension sein.

Die Trägerhülse des Anschlussstutzens, die vorzugsweise aus Metall gefertigt ist, dient als Druckträger und kann die notwendige Gegenkraft beim Aufpressen der Pressfassung auf das mit dem Hochdruckhydraulikschlauch versehene Kupplungselement erzeugen. Eine solche metallische Trägerhülse ist ein Rohrabschnitt, der bedarfsweise an einem oder beiden Enden zu einem radial nach außen gerichteten Rohrflansch umgeformt ist. Die Trägerhülse lässt sich auf einfache und kostengünstige Weise aus einem Metallrohr herstellen. Aufwendige Formgebungsverfahren wie bei bekannten Kupplungselementen zur Erzielung der notwendigen Struktur des rohrartigen Anschlussstutzens müssen mit dem Metallhalbzeug nicht vorgenommen werden.

Die Formgebung des erfindungsgemäßen Kupplungselements, d.h. eine gewünschte äußere Struktur, erhält der Anschlussstutzen des Kupplungselements bei seiner Herstellung, nämlich bei einem Spritzgießvorgang. Hierzu wird der Kunststoff in eine Spritzgießform eingespritzt, welche eine Negativform des gewünschten Kunststoffstutzens darstellt und entsprechende Ausformungen für die zu erzielenden Vorsprünge, Schultern, Vertiefungen oder sonstigen Elementen der Umfangsstruktur des rohrartigen Anschlussstutzens besitzt.

Zur unlösbaren Verbindung des Kunststoffstutzens mit der Trägerhülse kann eine kraftschlüssige und/oder formschlüssige und/oder stoffschlüssige Verbindung vorgesehen werden. Beispielsweise kann eine metallische Trägerhülse in den Kunststoffstutzen eingepresst werden. Bei einer vorteilhaften Ausführungsform zur Herstellung des Hybridbauteils wird ein zylindrischer metallischer Rohrabschnitt in die Spritzgussform eingelegt, welche der Herstellung des Kunststoffstutzens dient, d.h. die Spritzgussform ist entsprechend der gewünschten Gestalt des zu erzielenden Anschlussstutzens ausgebildet. In diese Spritzgussform wird der Kunststoff für den Kunststoffstutzen eingespritzt, vorzugsweise auf den zylindrischen metallischen Rohrabschnitt aufgespritzt. Bei diesem Spritzgussvorgang verbindet sich die metallische Trägerhülse mit dem Kunststoffstutzen und es kann ein fertiges Hybridbauteil der Spritzgussform entnommen werden.

Bei Verwendung eines medienbeständigen Kunststoffs kann die Trägerhülse auch im Kunststoff eingebettet werden.

Für eine bessere stoffschlüssige Verbindung zwischen Trägerhülse und Kunststoffstutzen kann die Trägerhülse vor dem Aufspritzen des Kunststoffs einer Vorbehandlung (Reinigung, Entfetten, Aufrauen, u.a.) unterzogen werden und/oder mit einem Haftvermittler beschichtet sein.

Zur Anwendung des Kupplungselementes für eine Schlauchkupplung von Hochdruckhydraulikleitungen wird der Kunststoffstutzen aus einem hochfesten Kunststoff hergestellt, d. h. es wird ein Kunststoff mit einer hohen Zugfestigkeit und mit einer hohen Druckfestigkeit eingesetzt. Diese Kriterien erfüllen beispielsweise Polyetherketone (PEK), vorzugsweise Polyetheretherketone (PEEK), aber auch faserverstärkte bzw. partikelverstärkte Kunststoffe, welche als Füllstoffe Keramik- oder Graphitanteile enthalten können. Solche Hochleistungspolymere lassen sich durch Spritzgießen verarbeiten. Bei diesem Spritzgießvorgang kann die geforderte Bauteilgenauigkeit für den Kunststoffstutzen ohne Nacharbeit in einem Prozessschritt erreicht werden. Die zur Gestaltung eines Anschlussstutzens notwendigen Geometrien lassen sich durch diesen Spritzvorgang in einfacher Weise und mit geringem Aufwand erzeugen. Der Werkstoff PEEK erfüllt neben der notwendigen Festigkeit und Formstabilität auch weitere Anwendungskriterien. So verfügt PEEK über eine sehr niedrige Kriechneigung. Diese gewährleistet eine sehr lange und wartungsfreie Lebensdauer. PEEK ist des Weiteren korrosionsbeständig, insbesondere beständig gegenüber Hydraulikmedien wie Wasser, Druckflüssigkeit und Mineralöle.

Bei einer weiteren Ausführungsform eines Kupplungselements kann vorgesehen werden, dass die Trägerhülse den gesamten Innenmantel des Kupplungselementes bildet. Die Trägerhülse wird dazu beispielsweise endseitig mit nach außen ragenden Rohrflanschen versehen oder begrenzt den Kunststoffstutzen in der Länge, so dass kein Hydraulikmedium bzw. kein ansonsten durch den Anschlussstutzen durchströmendes Fluid Kontakt zum Kunststoffstutzen hat. In diesem Fall kann ein nichtmedienbeständiger Kunststoff für den Kunststoffstutzen eingesetzt werden.

Eine metallische Trägerhülse besteht vorzugsweise aus Stahl oder Edelstahl oder Messing oder einer Kupfer-Nickel-Eisen-Legierung (CuNiFe-Legierung). Für besondere Anwendungsfälle kann die Trägerhülse eine Beschichtung aufweisen. Eine Beschichtung des Innenmantels der Trägerhülse kann zur Erhöhung der Korrosions- und Medienbeständigkeit vorgesehen werden. Eine Beschichtung des Außenmantels der Trägerhülse kann vorgesehen werden, um die stoffschlüssige Verbindung zum Kunststoff des Kunststoffstutzens zu verbessern.

Ein Hybridbauteil als Kupplungselement für eine Schlauchkupplung von Hochdruckhydraulikleitungen vorzusehen, ist aus mehreren Gründen vorteilhaft. Bei dem erfindungsgemäßen Kupplungsteil werden die notwendigen Anforderungen für eine Anwendung im Bereich der Hochdruckhydraulik erfüllt, wobei eine Funktionstrennung erfolgt. So wirkt nämlich einerseits die metallische Trägerhülse als Druckträger bei der Anwendung im Hochdruckhydraulikbereich und beim Aufpressen der Pressfassung. Andererseits besitzt der Kunststoffstutzen die Vorsprünge im Haltebereich für den Schlauch sowie die Dichtflächen gemäß Norm ISO 17165 im Verbindungsbereich, so dass der Kunststoffstutzen am vorderen Ende eine Abdichtung zu der anschließbaren Armatur gewährleistet. Beide Teile des Anschlussstutzens, nämlich der Kunststoffstutzen und die Trägerhülse, sind untrennbar miteinander verbunden, so dass dieser hybride Anschlussstutzen in gleicher Weise die notwendigen Funktionen eines bekannten metallischen Anschlussstutzens sicherstellt. Der erfindungsgemäße Anschlussstutzen ist für unterschiedliche Nennweiten, d.h. Innendurchmesser des Hochdruckhydraulikschlauchs oder der Trägerhülse, einsetzbar. Nachfolgend sind in einer Aufstellung ausgewählte Nennweiten, die für diese Nennweiten zulässigen Betriebsdrücke und der jeweils geprüfte Berstdruck angegeben. Die Anwendung der Hybridarmatur ist nicht auf diese Nennweiten begrenzt. Es wird in diesem Zusammenhang auf die Normen EN 853 bis EN 857 verwiesen, die weitere Hochdruckhydraulikschlauchverbindungen mit unterschiedlichen Schlauchkonstruktionen abdecken.

| Nennweite in mm | Betriebsdruck in MPa | Berstdruck in MPa |
|---|---|---|
| 5 | 8,0 bis 41,5 | 166 |
| 6 | 7,5 bis 40 | 160 |
| 8 | 6,8 bis 35 | 140 |
| 10 | 6,3 bis 33 | 132 |
| 12 | 5,8 bis 27,5 | 110 |

Die Materialauswahl und Herstellung kann an die gewünschten Funktionen für die Teile des hybriden Anschlussstutzens angepasst werden. Die Herstellung des hybriden Anschlussstutzens ist gegenüber der Herstellung eines metallischen Kupplungselementes kostengünstiger. Des Weiteren besitzt das hybride Kupplungselement aufgrund des vergleichsweise geringen Anteils an Metall ein wesentlich geringeres Gewicht, was insbesondere beim Einsatz der Schlauchkupplungen an beweglichen Vorrichtungen von Nutzen ist. Darüber hinaus kann durch die zwei unterschiedlichen Materialien, nämlich durch das Material der Trägerhülse und durch den Kunststoff des Kunststoffstutzens, eine gezieltere Materialauswahl für spezielle Anwendungsfälle erfolgen und gegebenenfalls auch eine Auswahl preiswerter Komponenten. Des Weiteren bietet die Herstellung durch Spritzgießen die Möglichkeit, in einem kontinuierlichen Verfahren weitere Komponenten, auch aus anderen Kunststoffen, an den Anschlussstutzen an zu formen, wie beispielsweise Dichtringe.

Die Erfindung wird nachfolgend in mehreren Ausführungsbeispielen und anhand der Zeichnung näher beschrieben. Die Zeichnung zeigt in
- Fig. 1: ein erfindungsgemäßes Kupplungselement,
- Fig. 2: ein weiteres erfindungsgemäßes Kupplungselement und
- Fig. 3: einen Anschlussstutzen eines weiteren erfindungsgemäßen Kupplungselementes.

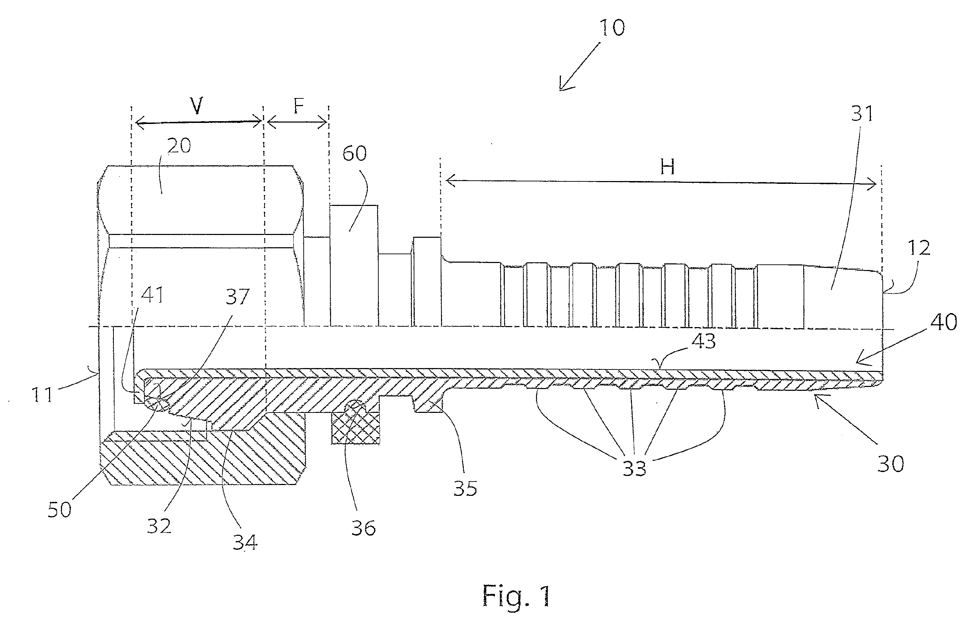

In den Fig. 1 bis 3 werden drei verschiedene erfindungsgemäße Kupplungselemente 10 gezeigt. Gleiche Bauteile sind mit den gleichen Bezugsziffern versehen, auch wenn die einzelnen Bauteile ggf. unterschiedliche Ausgestaltungen haben.

Fig. 1 zeigt ein Kupplungselement 10 einer Schlauchkupplung für Hochdruckhydraulikleitungen. Das Kupplungselement 10 umfasst in diesem Beispiel die Überwurfmutter 20, die am vorderen Ende 11 mit einer Armatur verbunden werden kann und den rohrartigen Anschlussstutzen, welcher aus einem Hybridbauteil besteht, nämlich aus dem Kunststoffstutzen 30 und der metallischen Trägerhülse 40. Der Kunststoffstutzen 30 und die metallische Trägerhülse 40 sind unlösbar miteinander verbunden und bilden ein einstückiges Bauteil. In Fig. 1 ist die metallische Trägerhülse 40 in den Kunststoffstutzen 30 soweit eingepresst worden, bis der am vorderen Ende 11 des Kupplungselementes 10 vorgesehene radial nach außen ragende Rohrflansch 41 der Trägerhülse 40 an der Stirnseite des Kunststoffstutzens 30 anschlägt. Bei einem angeschlossenem Schlauch und einer Verbindung zu einer Armatur, was nicht gezeigt ist, durchströmt das Hydraulikmedium die Trägerhülse, welche entsprechend an den Durchmesser des Hydraulikschlauchs angepasst ist. Im Beispiel von Fig. 1 besteht die Trägerhülse 40 aus Stahl und hat eine Länge von 57 mm, einen Außendurchmesser von 8 mm und einen Innendurchmesser von 6.5 mm. Sie besitzt ein Gewicht von 7,94 g. Die Materialauswahl und die Maße der Trägerhülse 40 können an verschiedene Anwendungsfälle angepasst werden. Der Innenmantel 43 der Trägerhülse 40 oder die gesamte Trägerhülse kann zusätzlich mit einer medienbeständigen Beschichtung versehen werden.

Die bekannte Form eines Anschlussstutzens erhält das Hybridbauteil durch den Kunststoffstutzen 30. Der Kunststoffstutzen 30, der aus Polyetheretherketon (PEEK) besteht, weist am vorderen Ende 11. Nämlich im Verbindungsbereich V, einen Dichtkegel 32 auf und.im Bereich der Kegelfläche des Dichtkegels 32 eine Aufnahme 37 zur Halterung eines zusätzlichen Dichtringes 50. Dieser Dichtkegel 32 wirkt bei einem Anschluss einer weiteren Armatur mit einem genormten Dichtkegel dieser Armatur zusammen und sichert die Abdichtung der Verbindung. Ausgehend vom vorderen Ende 11 und hinter dem Dichtkegel 32 ist ein ringförmiger Vorsprung 34 am Kunststoffstutzen 30 vorgesehen. Wie aus Fig. 1 zu ersehen, wurde am Einsteckende 12, also von der Schlauchnippelseite her, die Überwurfmutter 20 aufgeschoben, die am Vorsprung 34 gehalten wird und durch ein aufsteckbares Sicherungselement 60 vor Verlust beim Transport gesichert ist. Die Überwurfmutter 20 ist zwar über einen gewissen Bereich, den Führungsbereich F am Kunststoffstutzen 30, frei bewegbar, kann aber vor der Montage des Hochdruckhydraulikschlauchs, nicht mehr vom Kunststoffstutzen 30 herunter bewegt werden. Das Sicherungselement 60 stellt somit einen Verlierschutz dar. Im Beispiel der Fig. 1 ist das Sicherungselement 60 ein aufgesetzter Klemmring, welcher in einer Umfangsnut 36 des Kunststoffstutzens 30 aufgenommen ist.

In einer vorteilhaften Ausführungsform können die in den Figuren gezeigten, separaten Bauteile, nämlich der Dichtring 50 und das Sicherungselement 60 beim Herstellungsprozess auch stoffschlüssig mit dem Kunststoffstutzen 30 ausgebildet werden.

Der Kunststoffstutzen 30 umfasst in seiner Ausgestaltung weitere aus dem Stand der Technik bekannte und bei metallischen Anschlussstutzen vorkommende Elemente. Vom vorderen Ende 11 des Kupplungselementes 10 aus gesehen, hinter dem Sicherungselement 60, d. h. hinter dem Führungsbereich F, ist am Kunststoffstutzen 30 des Weiteren eine Schulter 35 angeordnet. Diese umfangseitige Schulter 35 dient als Anschlag für den auf den Schlauchnippel 31 vom Einsteckende 12 aus aufschiebbaren Hydraulikschlauch und als Anschlag für die das Schlauchende umgebende Pressfassung. Hydraulikschlauch und Pressfassung sind nicht gezeigt. Der Schlauchnippel 31 besitzt an seinem Außenmantel einen Haltebereich H für den Schlauch, der sich bis zum Anschlagflansch 35 erstreckt, und in diesem Haltebereich H zum Hochdruckschlauch gerichtete, also radial nach außen ragende Vorsprünge 33, die beim radialen Verpressen, nämlich beim Aufpressen der Pressfassung an den Schlauchnippel 31, in den Schlauch eingedrückt werden und vorzugsweise mit Wandverformungen der Pressfassung derart zusammenwirken, dass der Schlauch axialfest mit dem Kupplungselement 10 verbunden ist. Bei diesem radialen Verpressen nimmt die Trägerhülse 40 als Druckträger die radialen Druckkräfte auf.

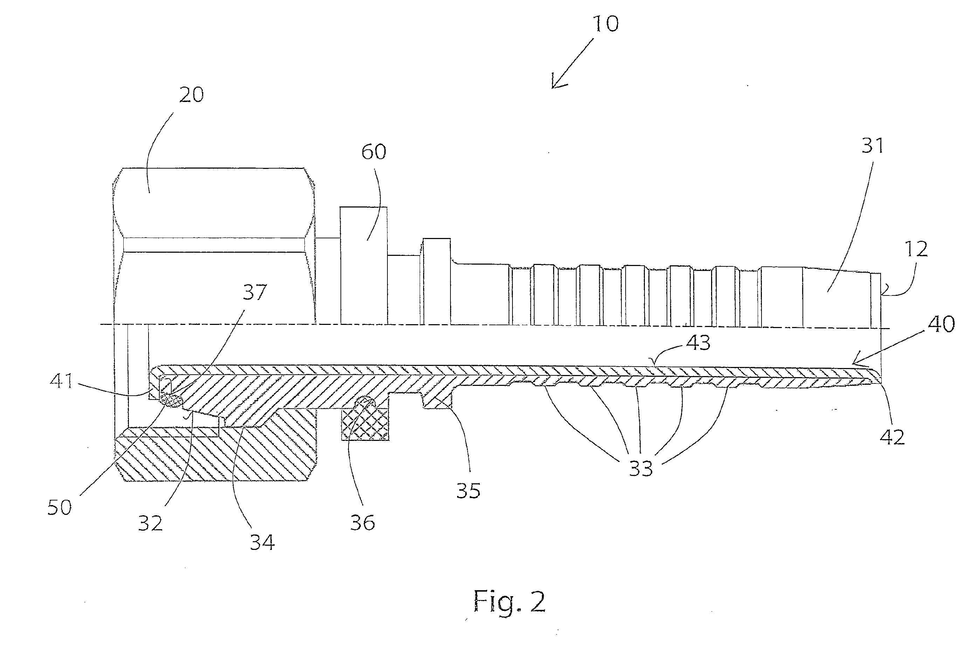

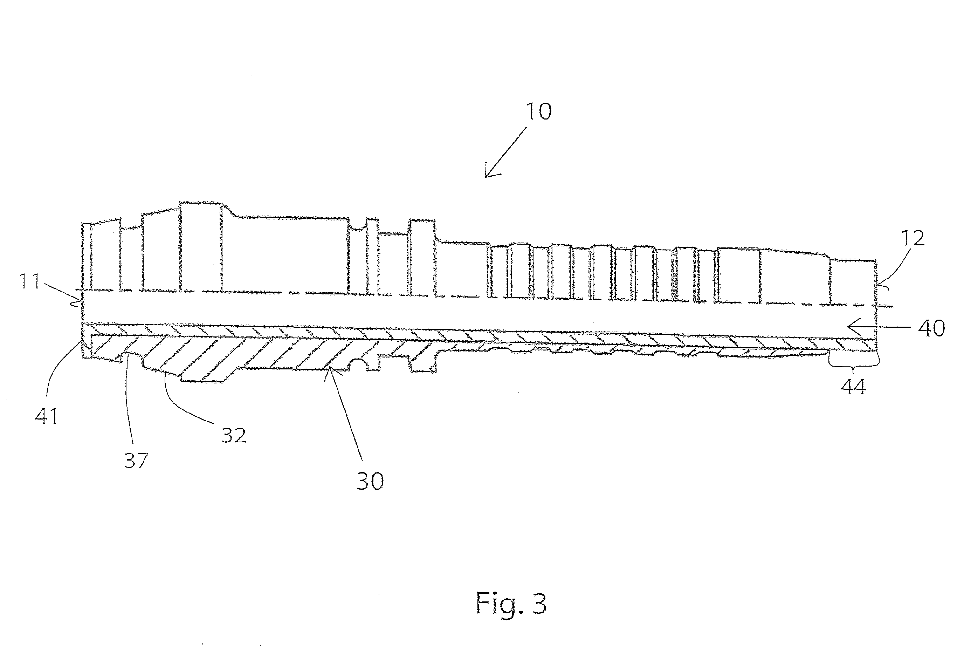

Fig. 2 zeigt eine weitere Ausführungsform des erfindungsgemäßen Kupplungselementes 10. In diesem Fall ist die Trägerhülse 40 an beiden Enden mit einem radial nach außen ragenden Rohrflansch 41, 42 versehen. Ein solches nach außen abgebogenes Hülsenende unterstützt die formschlüssige /kraftschlüssige Verbindung mit dem Kunststoffstutzen 30, der insbesondere bei zwei Rohrflanschen 41, 42 axialfest mit der Trägerhülse 40 verbunden ist. Eine solche Ausführung des Kupplungselementes 10 wird des Weiteren vorgesehen, wenn verhindert werden soll, dass der Kunststoff des Kunststoffstutzens 30 in Kontakt mit der durch die Schlauchkupplung fließenden Hydraulikflüssigkeit kommt. Auf diese Weise kann für den Kunststoffstutzen 30 ein Kunststoff gewählt werden, der gute mechanische Eigenschaften und/oder hohe Temperaturbeständigkeit aufweist, jedoch nicht medienbeständig ist. Das vorbeschriebene Ziel wird ebenfalls erreicht, wenn am Einsteckende 12 des Kupplungselementes 10 kein Rohrflansch 42 vorgesehen wird, sondern, wie in Fig. 3 gezeigt, die Trägerhülse 40 den Kunststoffstutzen 30 um eine gewisse Länge, nämlich um das Endstück 44, überragt.

Die Ausführungsform gemäß Fig. 3 zeigt darüber hinaus einen Dichtkegel 32, bei dem die Aufnahme 37 für den Dichtring 50 im mittleren Bereich der Kegelfläche des Dichtkegels 32 vorgesehen ist. Die äußere Gestalt des Anschlussstutzens, d.h. des Kunststoffstutzens 30 wird in einfacher Weise beim Spritzgießen erhalten.

Dazu soll nachfolgend das Herstellungsverfahren beschrieben werden. Für eine beispielsweise metallische Trägerhülse 40 wird ein metallischer Rohrabschnitt von einem Metallrohr abgetrennt. Bei einer vorteilhaften Ausführung (Fig. 1) wird das eine Ende des Rohres zu einem Flansch 41 umgeformt. Der Rohrabschnitt wird in eine Spritzgussform eingelegt, die entsprechend der gewünschten Form des zu erzielenden Anschlussstutzens für das Kupplungselement 10 ausgebildet ist, d. h. entsprechende Ausformungen für die Vorsprünge 33, 34, für die Schulter 35, den Dichtkegel 32 und ggf. für die Umfangsnut 36 sowie die Aufnahme 37 aufweist. Nach Schließen der Spritzgussform wird der Kunststoff in die Spritzgussform eingespritzt, wobei sich die Spritzgussform füllt und der Kunststoff sich mit dem metallischen Rohrabschnitt verbindet. In einem Zweikomponentenverfahren (2K-Verfahren) kann zusätzlich für den Dichtring 50 ein weicher Kunststoff zur Bildung des Dichtrings 50 an die vorgesehene Stelle der Spritzgussform eingespritzt werden.

Des Weiteren ist es möglich, in einem kontinuierlichen Verfahren nach der Herstellung des hybriden Anschlussstutzens, nämlich der Kombination aus Trägerhülse 40 und Kunststoffstutzen 30 ggf. mit Dichtring 50, weitere Elemente an den Anschlussstutzen anzuspritzen. Dazu wird beispielsweise das aus der Spritzgussform entnommene Hybridbauteil vom Einsteckende 12 aus mit einer Überwurfmutter 20 bestückt, die bis an den Vorsprung 34 geführt wird und anschließend durch einen weiteren Kunststoffspritzvorgang ein Sicherungselement 60 am Umfang des Kunststoffstutzens 30 angeformt. Bei einem solchen Anspritzvorgang kann umfangseitig ein Ring als Sicherungselement 60 angeformt werden oder es werden den Führungsbereich F begrenzende, über den Umfang verteilt angeordnete, nach außen ragende Nasen als Sicherungselement 60 vorgesehen. Ein Sicherungselement 60 kann also als separates Bauteil kraft- und/oder formschlüssig mit dem Kunststoffstutzen 30 verbunden werden oder aber, wie vorbeschrieben, stoffschlüssig mit dem Kunststoffstutzen verbunden sein.

In gleicher Weise kann ein Dichtring 50 als separates Bauteil am Kunststoffstutzen 30 in einer vorgesehenen Aufnahme 37 kraft- und/oder formschlüssig mit dem Kunststoffstutzen 30 verbunden werden oder durch Spritzgießen stoffschlüssig mit dem Kunststoffstutzen verbunden werden.

### Bezugszeichenliste:

- 10: Kupplungselement
- 11: vorderes Ende
- 12: Einsteckende

- 20: Überwurfmutter

- 30: Kunststoffstutzen
- 31: Schlauchnippel
- 32: Dichtkegel
- 33: Vorsprünge
- 34: Vorsprung
- 35: Schulter
- 36: Umfangsnut
- 37: Aufnahme

- 40: Trägerhülse
- 41: Rohrflansch
- 42: Rohrflansch
- 43: Innenmantel
- 44: Endstück

- 50: Dichtring
- 60: Sicherungselement

- F: Führungsbereich
- H: Haltebereich
- V: Verbindungsbereich

## Patentansprüche

1. Kupplungselement (10) für eine Schlauchkupplung für Hochdruckhydraulikleitungen,
- aus einem rohrartigen Anschlussstutzen, der am vorderen Ende (11) in einem Verbindungsbereich (V) an eine Armatur anschließbar ist und der am anderen Einsteckende (12) einen Schlauchnippel (31) zum Halten eines aufschiebbaren Hochdruckschlauchs aufweist,
- wobei der Schlauchnippel (31) in einem Haltebereich (H) radial zum Hochdruckschlauch verlaufende und zum Hochdruckschlauch gerichtete Vorsprünge (33) besitzt,
**dadurch gekennzeichnet, dass**
- der Anschlussstutzen ein Hybridbauteil ist, nämlich aus einem Kunststoffstutzen (30) und einer als Druckträger dienenden Trägerhülse (40) besteht, welche unlösbar miteinander verbunden sind,
- wobei der Kunststoffstutzen (30) in dem Haltebereich (H) die radial zum Hochdruckschlauch verlaufenden und zum Hochdruckschlauch gerichteten Vorsprünge (33) besitzt und in dem Verbindungsbereich (V) mit einem Dichtkegel (32) versehen ist.

2. Kupplungselement nach Anspruch 1, **dadurch gekennzeichnet, dass** der Kunststoffstutzen (30) aus einem hochfesten Kunststoff besteht, wie beispielsweise aus einem Polyetherketon (PEK) oder aus einem faserverstärkten Kunststoff oder aus einem partikelverstärkten Kunststoff, vorzugsweise aus einem Polyetheretherketon (PEEK).

3. Kupplungselement nach Anspruch 1 oder 2, **dadurch gekennzeichnet, dass** eine metallische Trägerhülse (40) beim Spritzgießen des Kunststoffstutzen (30) mit diesem verbunden worden ist oder eine metallische Trägerhülse (40) in den fertigen Kunststoffstutzen (30) eingepresst ist.

4. Kupplungselement nach einem der Ansprüche 1 oder 2, **dadurch gekennzeichnet, dass** die Trägerhülse (40) den gesamten Innenmantel (43) des Kupplungselementes (10) bildet, so dass ein den Anschlussstutzen durchströmendes Fluid keinen Kontakt zum Kunststoffstutzen (30) hat.

5. Kupplungselement nach einem der Ansprüche 1 bis 4, **dadurch gekennzeichnet, dass** die zylindrische Trägerhülse (40) endseitig zumindest einen radial nach außen ragenden Rohrflansch (41, 42) besitzt.

6. Kupplungselement nach Anspruch 1 oder 2, **dadurch gekennzeichnet, dass** die Trägerhülse (40) am vorderen Ende (11) einen Rohrflansch (41) besitzt und am Einsteckende (12) den Kunststoffstutzen (30) in der Länge mit einem Endstück (44) überragt.

7. Kupplungselement nach einem der Ansprüche 1 bis 6, **dadurch gekennzeichnet, dass** die Trägerhülse (40) aus Stahl oder Edelstahl oder Messing oder einer Kupfer-Nickel-Eisen-Legierung oder einem hochfesten Kunststoff besteht und gegebenenfalls zur besseren Verbindung mit dem Kunststoffstutzen (30) eine Beschichtung aufweist.

8. Kupplungselement nach einem der Ansprüche 1 bis 7, **dadurch gekennzeichnet, dass** der Kunststoffstutzen (30) am vorderen Ende (11) im Bereich der Kegelfläche des Dichtkegels (32) eine Aufnahme (37) zur Halterung eines zusätzlichen Dichtrings (50) besitzt.

9. Kupplungselement nach einem der Ansprüche 1 bis 8, **dadurch gekennzeichnet, dass** der Anschlussstutzen (30, 40) mittels einer Überwurfmutter (20) an eine Armatur anschließbar ist, wobei hierfür am Kunststoffstutzen (30) ein ringförmiger Vorsprung (34) vorgesehen ist, der vorzugsweise ausgehend vom vorderen Ende (11) hinter dem Dichtkegel (32) angeordnet ist und dass am Kunststoffstutzen (30) ausgehend vom vorderen Ende (11) hinter dem ringförmiger Vorsprung (34) ein Führungsbereich (F) für die Überwurfmutter (20) vorgesehen ist und dieser Führungsbereich (F) vorzugsweise an einem Sicherungselement (60) endet.

10. Kupplungselement nach Anspruch 9, **dadurch gekennzeichnet, dass** das Sicherungselement (60) ein Klemmring ist, welcher in einer Umfangsnut (36) aufgenommen ist.

11. Verfahren zur Herstellung eines Kupplungselements (10) gemäß einem der Ansprüche 1 bis 10 mit den folgenden Verfahrensschritten sschritten:
- Einlegen eines zylindrischen metallischen Rohrabschnitt in ein Spritzgussform, wobei die Spritzgussform entsprechend der gewünschten Form eines Anschlussstutzens für das Kupplungselement ausgebildet ist,
- Einspritzen von hochfestem Kunststoff in die Spritzgussform zur Bildung eines Kunststoffstutzens (30)
wobei der Rohrabschnitt als metallische Trägerhülse (40) mit dem Kunststoffstutzen unlösbar verbunden wird,
- Entnehmen des fertigen Hybridbauteils aus der Spritzgussform.

12. Verfahren nach Anspruch 11, **dadurch gekennzeichnet, dass** beim Spritzgießen Dichtelemente (50) aus einem weichen Kunststoff am Kunststoffstutzen angespritzt werden.

13. Verfahren nach Anspruch 11 oder 12, **dadurch gekennzeichnet, dass** nach dem Spritzgießen eine Überwurfmutter (20) auf den Kunststoffstutzen montiert wird und nach der Montage ein Sicherungselement (60) als Anschlag oder Verlierschutz für die Überwurfmutter mit dem Kunststoffstutzen verbunden wird.

14. Verfahren nach Anspruch 13, **dadurch gekennzeichnet, dass** das Sicherungselement (60) kraft- und/oder formschlüssig mit dem Kunststoffstutzen (30) verbunden wird.

15. Verfahren nach Anspruch 13, **dadurch gekennzeichnet, dass** das Sicherungselement durch Spritzgießen stoffschlüssig mit dem Kunststoffstutzen verbunden wird.

## Claims

1. A coupling element (10) for a hose coupling for high-pressure hydraulic lines,
- made from tubular connection nozzle that can be connected at the front end (11) in a connecting area (V) to a fitting and features a hose nipple (31) at the other pushin end (12) to hold a high-pressure hose that can be pushed on,
- whereby, the hose nipple (31) has projections (33) in a retaining area (H) dispersed radial to the high-pressure hose and aligned towards the high-pressure hose,
**characterized in that**
- the connection nozzle is a hybrid component, namely made from a plastic nozzle (30) and has a support sleeve (40) used as a pressure carrier that are connected to one another and can be disconnected,
- whereby, the plastic nozzle (30) has projections (33) in the retaining area (H) dispersed radial to the high-pressure hose and aligned towards the high-pressure hose and is provided with a conical seal (32) in the connecting area (V).

2. A coupling element in accordance with claim 1, **characterized in that** the plastic nozzle (30) is made from a high-strength plastic, for example polyetherketone (PEK) or made from a fibre-reinforced plastic or made from a particle-reinforced plastic, preferably made from a polyetheretherketone (PEEK).

3. A coupling element in accordance with claim 1 or 2, **characterized in that** a metallic support sleeve (40) has been connected to this during injection moulding of the plastic nozzle (30), or a metallic support sleeve (40) is pressed into the finished plastic nozzle (30).

4. A coupling element in accordance with one of the claims 1 or 2, **characterized in that** the support sleeve (40) forms the complete inner sheath (43) of the coupling element (10), so that a fluid flowing through the connection nozzle has no contact with the plastic nozzle (30).

5. A coupling element in accordance with one of the claims 1 to 4, **characterized in that** the cylindrical support sleeve (40) has a minimum of one radial pipe flange (41, 42) at the end that projects outwards.

6. A coupling element in accordance with claim 1 or 2, **characterized in that** the support sleeve (40) has a pipe flange (41) at the front end (11) and, at the plug-in end (12), the plastic nozzle (30) projects its full length, with an end piece (44).

7. A coupling element in accordance with of the claims 1 to 6, **characterized in that** the support sleeve (40) is made from steel, or stainless steel, or brass, or a copper-nickeliron alloy, or a high-strength plastic and, if necessary, for better connection to the plastic nozzle (30), features a coating.

8. A coupling element in accordance with one of the claims 1 to 7, **characterized in that** the plastic nozzle (30) at the front end (11) has a receptacle (37) in the area of the conical surface of the conical seal (32) for retaining an additional sealing ring (50).

9. A coupling element in accordance with one of the claims 1 to 8, **characterized in that** the connection nozzle (30, 40) can be connected to a fitting by a union nut (20), whereby, a circular projection (34) is provided on the plastic nozzle (30) for this, which is preferably arranged starting at the front end (11), behind the conical seal (32) and that at the plastic nozzle (30), starting from the front end (11), behind the circular projection (34), a guide area (F) is provided for the union nut (20) and this guide area (F) preferably ends at a securing element (60).

10. A coupling element in accordance with claim 9, **characterized in that** the securing element (60) is a clamp ring that is accommodated in a circumferential groove (36).

11. Procedure to manufacture the coupling element (10) in accordance with one of the claims 1 to 10, with the following procedural steps:
- Place a cylindrical, metallic pipe section in an injection mould, whereby, the injection mould is formed according to the required shape of a connection nozzle for the coupling element,
- Injection of high-strength plastic into the injection mould to form a plastic nozzle (30)
whereby, the pipe section, is permanently connected to the plastic nozzle as a metallic support sleeve (40),
- Removing the finished hybrid component from the injection mould.

12. Procedure in accordance with claim 11, **characterized in that** sealing elements (50) made from a soft plastic are injected onto the plastic nozzle during injection moulding.

13. Procedure in accordance with claim 11 or 12, **characterized in that** a union nut (20) is installed on the plastic nozzle after injection moulding and also a securing element (60) is installed, connected to the plastic nozzle, as a stop or protection against loss for the union nut.

14. Procedure in accordance with claim 13, **characterized in that** the securing element (60) is connected to the plastic nozzle (30) by positive or forced locking.

15. Procedure in accordance with claim 13, **characterized in that**, through the injection moulding, the securing element is connected to the plastic nozzle by material bonding.

## Revendications

1. Élément de couplage (10) pour un couplage de flexible pour conduites hydrauliques,
- comprenant un embout de raccordement en forme de tuyau qu'il est possible de raccorder à l'extrémité avant (11) dans une zone de jonction (V) contre une robinetterie et qui à l'autre extrémité d'enfichage (12) présente un nipple (31) servant à retenir un flexible haute pression enfilable,
- sachant que le nipple (31) possède, dans une zone de retenue (H), des saillies (33) présentant un tracé radial par rapport au flexible haute pression et dirigées vers le flexible haute pression,
**caractérisé en ce que**
- l'embout de raccordement est un composant hybride comprenant un embout (30) en matière plastique et une douille support (40) servant de support de pression et reliés ensemble de manière indétachable,
- sachant que l'embout (30) en matière plastique présente dans la zone de retenue (H) les saillies (33) ayant un tracé radial par rapport au flexible haute pression et regardant ce flexible, et qu'il est doté d'un cône d'étanchéité (32) dans la zone de jonction (V).

2. Élément de couplage selon la revendication 1, **caractérisé en ce que** l'embout (30) en plastique se compose d'une matière plastique hautement résistante telle que par exemple du polyéthercétone (PEK) ou d'une matière plastique renforcée de fibres de verre ou d'une matière plastique renforcée de particules, de préférence du polyétheréthercétone (PEEK).

3. Élément de couplage selon la revendication 1 ou 2, **caractérisé en ce qu'**une douille support (40) métallique a été reliée avec l'embout (30) en matière plastique au moment de mouler ce dernier par injection, ou qu'une douille support (40) métallique a été sertie sous pression dans l'embout en plastique (30) fini.

4. Élément de couplage selon la revendication 1 ou 2, **caractérisé en ce que** la douille support (40) forme l'ensemble de la gaine intérieure (43) de l'élément de couplage (10), de sorte qu'un fluide traversant l'embout de raccordement n'entre pas en contact avec l'embout (30) en matière plastique.

5. Élément de couplage selon l'une des revendications 1 à 4, **caractérisé en ce que** la douille support (40) cylindrique présente à une extrémité au moins un flasque (41, 42) de tuyau faisant radialement saillie vers l'extérieur,

6. Élément de couplage selon la revendication 1 ou 2, **caractérisé en ce que** la douille support (40) présente un flasque (41) de tuyau à l'extrémité avant (11), et qu'à l'extrémité d'enfichage (12) elle dépasse de l'embout en plastique (30) dans le sens de la longueur par une pièce terminale (44).

7. Élément de couplage selon l'une des revendications 1 à 6, **caractérisé en ce que** la douille support (40) est en acier ou acier inox ou laiton, ou en un alliage de cuivre, nickel et fer, ou en une matière plastique hautement résistante, et qu'elle présente le cas échéant un revêtement pour améliorer la jonction avec l'embout en plastique (30).

8. Élément de couplage selon l'une des revendications 1 à 7, **caractérisé en ce que** l'embout en plastique (30) présente, à l'extrémité avant (11), dans la zone de la surface conique du cône d'étanchéité (32), un réceptacle (37) destiné à retenir une bague d'étanchéité (50) supplémentaire.

9. Élément de couplage selon l'une des revendications 1 à 8, **caractérisé en ce que** l'embout de raccordement (30, 40) est raccordable à une robinetterie au moyen d'un écrou à collet (20), sachant qu'à cette fin est prévu sur l'embout (30) en matière plastique une saillie (34) annulaire qui est agencée de préférence derrière le cône d'étanchéité (32) en partant de l'extrémité avant (11), et **en ce qu'**est prévu contre l'embout (30) en matière plastique, derrière la saillie (34) de forme annulaire en partant de l'extrémité avant (11), une zone de guidage (F) pour l'écrou à collet (20) et que cette zone de guidage (F) se termine de préférence contre un élément de sécurisation (60).

10. Élément de couplage selon la revendication 9, **caractérisé en ce que** l'élément de sécurisation (60) est une bague de bridage logée dans une gorge périphérique (36).

11. Procédé de fabrication d'un élément de couplage (10) selon l'une des revendications 1 à 10, comprenant les étapes de procédé suivantes:
- Mise en place d'un segment de tuyau métallique cylindrique dans un moule destiné au moulage injecté, sachant que ledit moule présente une géométrie permettant de conférer la forme d'un embout de raccordement pour l'élément de couplage,
- Injection de matière plastique hautement résistante dans le moule à cet effet pour former un embout en matière plastique (30)
sachant que cette opération relie de manière non détachable le segment de tuyau (40) métallique avec l'embout en matière plastique,
- Retrait, du moule, du composant hybride fini de mouler par injection.

12. Procédé selon la revendication 11, **caractérisé en ce que** pendant le moulage par injection, des éléments d'étanchéité (50) en matière plastique molle sont injectés contre l'embout en matière plastique.

13. Procédé selon la revendication 11 ou 12, **caractérisé en ce qu'**après le moulage par injection un écrou à collet (20) est monté sur l'embout en matière plastique et qu'après le montage un élément de sécurisation (60) est relié à l'embout en matière plastique pour servir de butée ou de protection empêchant de perdre l'écrou à collet.

14. Procédé selon la revendication 13, **caractérisé en ce que** l'élément de sécurisation (60) est relié par adhérence de forces et/ou de formes avec l'embout en matière plastique (30).

15. Procédé selon la revendication 13, **caractérisé en ce que** l'élément de sécurisation est relié par adhérence de matières, au cours de l'opération de moulage par injection, avec l'embout en matière plastique.
